# EUROPEAN PATENT SPECIFICATION

(11) **EP 0 393 899 B1**
(45) Date of publication and mention of the grant of the patent: **22.05.1996**
(21) Application number: 90303774.5
(22) Date of filing: 09.04.1990
(51) Int. Cl.: C08F 265/04, C08F 257/00

(54) **Nitrogenous graft copolymers, hybrid copolymers of such graft copolymers with random nitrogenous copolymers, and methods for their preparation**
Stickstoffhaltige Pfropfcopolymere, Hyrid-Copolymere aus diesen Pfropfcopolymeren und aus statistischen stickstoffhaltigen Copolymeren und deren Herstellung
Copolymères greffés azotés, copolymères hybrides à partir de ces copolymères greffés et de copolymères statistiques azotés, leur méthode de préparation

(30) Priority: 18.04.1989 US 339574
(43) Date of publication of application: 24.10.1990
(60) Divisional application: 95108505.9
(73) Proprietor: ROHM AND HAAS COMPANY, Philadelphia Pennsylvania 19105 (US)
(72) Inventor: Bollinger, Joseph Martin, North Wales, Pennsylvania 19454 (US); Lai, Chung-Yin, Plymouth Meeting, Pennsylvania 19462 (US); Margosian, Daniel, Naperville, Illinois 60540 (US); Delion, Anne Denise, 60 Avenue de Nice, F-06600 Antibes (FR)
(74) Representative: Tanner, James Percival

(56) References cited:
- EP-A- 0 087 234
- EP-A- 0 201 164
- FR-A- 2 319 654
- FR-A- 2 416 941
- US-A- 3 506 574
- US-A- 4 715 975

## Description

### NITROGENOUS GRAFT COPOLYMERS AND METHODS FOR THEIR PREPARATION

This invention is concerned with graft copolymers of nitrogenous monomers on polymeric substrates and to methods of producing such graft copolymers.

Viscosity index improvers have been essentially excluded from diesel formulations up until about 1973 because it was believed that engine cleanliness was degraded by these additives. Multigrade oils which employ viscosity index improvers were therefore avoided for use as lubricating oils in large diesel engines. As a result, large diesel engines were operated continuously in cold weather because of the difficulty of restarting cold engines.

All lubricant fluids, whatever their service, are exposed to environments which tend to cause the fluid to become dirty with use. The contaminants may be either external in origin, as for example in automotive crankcases where sludge and varnish are formed from a complex reaction of partially burned gasoline and blowby gases, or internal via direct oxidative degradation of the lubricant itself. In either case, these deposits, unless dispersed, will settle out of the lubricant to cause plugging of filters or even sticking of moving parts where tight tolerances are involved.

Copolymers for use as additives in lubricating oils are well known. These copolymers are suitable for use as viscosity index improvers to provide multigrade lubricating oils which retain their fluidity at low temperatures.

Polymethacrylates (PMA) have long been known for their excellence for influencing the viscosity-temperature characteristics of lubricants. Modification of the polymethacrylates can be made to combine dispersancy and viscosity-temperature control in a class of additives commonly known as dispersant viscosity index improvers, of which N-vinylpyrrolidone-alkyl methacrylate copolymers are a prime example (see US-A-3,506,574).

Polymethacrylates, although known to be excellent viscosity index improvers which provide outstanding low temperature performance, are, however, relatively inefficient as a thickener. PMA therefore requires higher use levels than, for example, olefin copolymers or hydrogenated styrene diene copolymers. The need for higher usage levels has made it difficult for multigrade oils formulated with PMA to gain commercial acceptance in diesel applications.

The preparation of highly dispersant graft copolymers by graft polymerization of a polar monomer to a preformed polymer substrate is well known (see, for example, US-A-4,146,489 and US-A-3,506,574). An advantage associated with the production of highly dispersant graft copolymers by graft polymerization is that graft polymerization requires relatively small amounts of expensive polar graft monomers. A significant disadvantage to some graft polymerization processes, however, is that residual ungrafted polar nitrogenous monomer may cause objectionable odor or toxicological effects such as eye irritation, skin sensitization, poisoning through skin absorption, etc., as well as damage to equipment.

Several techniques are known for eliminating or reducing the amount of residual polar monomer. Illustrative of these techniques is hydrogenation as shown in US-A-4,427,821. The hydrogenation technique of US-A-4,427,821, although it may reduce the amount of residual polar monomer, may produce a material which, in terms of toxicological effects, is equally harmful as, or even more harmful than, the original materials containing the residual polar monomers, and which may lead to possible degradation of machine parts. Moreover, hydrogenation can be extremely expensive.

As an alternative to hydrogenation, vacuum distillation may be used to eliminate residual polar monomers. An example of vacuum distillation is shown in USA-4,146,498. Vacuum distillation processes, however, have several drawbacks in that expensive equipment is required. Moreover, it is necessary to dispose of the waste material removed by the distillation process. Vacuum distillation also may adversely affect the product properties of the resultant copolymer.

A need therefore exists for graft copolymers, particularly with nitrogenous monomers, and methods for their preparation, that avoid the drawbacks of the prior art.

We have now found graft copolymers of nitrogenous monomers on a polymeric substrate which may be used as viscosity index improvers and which show unexpectedly superior dispersant properties in multigrade lubricating oils for use in internal combustion engines. In particular, multigrade lubricating oils which include the graft of the invention show unexpectedly superior performance in large diesel engines.

According to the present invention there is provided a nitrogenous graft copolymer having improved performance in internal combustion engines, which comprises a polymeric substrate onto which is grafted one or more nitrogenous monomer, and wherein:
(a) the polymeric substrate comprises units of a mixture of vinyl monomers, and, optionally, units of one or more olefin monomer or olefin copolymer;
(b) the nitrogenous monomer(s) is/are selected from vinylpyridines, vinylpyrroles, vinylindoles, vinylquinolines, vinylisoquinolines, vinylacridines, vinylpyrazines, vinylpyrimidines, vinylpyridazines, vinylimidazoles, vinylthiazoles, acrylamides, methacrylamides, dimethylaminoethylmethacrylate, dimethylaminoethylacrylate, N-vinylcarbazole, N-vinylsuccinimide, acrylonitrile, o-, m- and p-aminostyrene, maleimide, n-vinyloxazolidine, N,N-dimethylaminoethylvinylether, ethyl-2-cyanoacrylate, N-vinylphthalimide, N-vinylbenzyldimethylamine, N-methacryloxyethylmorpholine, and N-maleimide of dimethylaminopropylamine; and
(c) the graft copolymer does not contain a lactam grafted onto the polymeric substrate.

The present invention also provides a method of producing the nitrogenous graft copolymers, which comprises:-
(a) polymerization of a mixture of vinyl monomers, optionally together with one or more olefin monomer or copolymer, to produce a polymeric substrate that constitutes at least ninety one percent, for example at least ninety three percent, conversion of monomer to polymer; and
(b) graft polymerizing, onto the polymeric substrate and in the presence of a free radical initiator capable of hydrogen abstraction, one or more polymerizable nitrogenous monomer selected from vinyl pyridines, vinylpyrroles, vinylindoles, vinylquinolines, vinylisoquinolines, vinylacridines, vinylpyrazines, vinylpyrimidines, vinylpyridazines, vinylimidazoles, vinylthiazoles, acrylamides, methacrylamides, dimethylaminoethylmethacrylate, dimethylaminoethylacrylate, N-vinylcarbazole, N-vinylsuccinimide, acrylonitrile, o- ,m- and p-aminostyrene, maleimide, N-vinyl oxazolidine, N,N-dimethylaminoethylvinylether, ethyl-2-cyanoacrylate, N-vinylphthalimide, N-vinylbenzyldimethylamine, N-methacryloxyethylmorpholine, and N-maleimide of dimethylaminopropylamine; and wherein the graft copolymer does not contain a lactam grafted onto the polymeric substrate.

In one embodiment of the method of producing the nitrogenous graft copolymers of the invention step (a) comprises polymerizing a first portion of the vinyl monomers and, if used, the olefin monomer(s) or copolymer(s), while adding a second portion of the vinyl monomers and, if used, the olefin monomer(s) or copolymer(s), to the first portion to polymerize both the first and second portions to form the polymeric substrate. Thereafter, a nitrogenous monomer is grafted onto the polymeric substrate.

For convenience, the vinyl monomers, and optional olefin monomer(s) and olefin copolymer(s), used in the production of the polymeric substrate, will be referred to as the "constituent monomers".

The manufacture of the nitrogenous graft copolymers of this invention generally entails the addition of a nitrogenous monomer to a reaction solution, within a reaction solvent, of the constituent monomers forming the polymeric substrate. For example, a first portion of the constituent monomers may be polymerized in the reaction solution while adding a second portion of the constituent monomers to form the polymeric substrate. Thereafter, the nitrogenous monomer is grafted onto the polymeric substrate. the relative amounts of the first and second portions employed to form the substrate may vary over a wide range. For example, the first portion may vary from greater than zero to less than 100 percent of the constituent monomers. Similarly, the manner of addition of the second portion may be varied. For example, the second portion may be added in the form of a single addition or added over an extended period of time. Alternatively, the constituent monomers used to form the polymeric substrate may be added as a single addition. For example, a reaction mixture may be prepared comprising the reaction solvent and constituent monomers , and subsequently polymerizing the constituent monomers, or the constituent monomers may be added to the reaction solvent as a single addition or over a period of time.

There is no limitation as to the compositions of the polymeric substrate which may be employed in the invention. Preferably, however, the substrate polymers are formed by polymerization of constituent monomers in the presence of a free radical polymerization initiator. Monomers suitable for polymerization into the polymeric substrate include acrylates, methacrylates, styrene, styrene derivatives, maleates, fumarates, and maleic anhydrides followed by functionalization of the anhydride. Accordingly, polymers formed from, for example, mixtures of acrylates with methacrylates, styrene with acrylates, styrenes with methacrylates, styrene derivatives with acrylates, styrene derivatives with methacrylates, olefin copolymers with acrylates or olefin copolymers with methacrylates may be employed as the polymeric substrate.

Polymerization of the constituent monomers may be initiated by a polymerization initiator in the reaction solution that effects free radical polymerization. The polymerization initiators which may be employed may be selected from a wide variety of compositions. For example, polymerization initiators may be selected from the general classes of peroxides, hydroperoxides, peroxyesters and peroxycarbonates.

The principal requirement for the polymeric substrate employed in the graft copolymer is that the substrate be formed from polymerization, hereinafter referred to as "conversion", of a high percentage of the constituent monomers. Typically, at least about 91% of the constituent monomers is/are converted into polymer prior to grafting. Preferably, at least about 93% of the constituent monomers is/are converted to polymer. Most preferably, at least about 94% of the constituent monomers is/are converted into polymer. Polymerizing a high percentage of the constituent monomers appears to assure that a high percentage of the resultant polymeric substrate will have been grafted by the nitrogenous monomer(s), hereinafter referred to as "active fraction". Achieving a high active fraction appears necessary to provide multigrade lubricating oils that provide the required dispersancy for providing the improved performance in internal combustion engines.

Grafting is performed by adding one or more nitrogenous graft monomer to the polymeric substrate within the reaction solution in the presence of a graft initiator capable of hydrogen abstraction. The amount of the nitrogenous graft monomer(s) which may be added to the reaction solution is limited by the need to retain solubility of the resultant grafted polymer in lubricating oil. Typically, up to about 6% of the nitrogenous monomer(s), based on the amount of constituent monomers employed to form the polymeric substrate, may be added to the reaction solution. Preferably, about 2.5 to 3.5% of nitrogenous monomer is added to the reaction solution.

A variety of graft initiator materials may be employed. Any free radical source capable of hydrogen abstraction or addition to unsaturation in the substrate may be used as the graft initiator. Examples of graft initiators suitable for use in the invention include alkylperoxyesters, dialkyl peroxides, such as di-t-butylperoxide; alkyl hydroperoxides such as t-butylhydroperoxide, diacyl peroxides, t-butylperoctoate, cumenehydroperoxide, benzoylperoxide, t-butylperoxyisopropylcarbonate; t-butylperacetate; t-butylperoctoate; t-butylperbenzoate; 2-t-butylazo-2-cyanopropane; di-cumylperoxide; and 1,1-di-t-butylperoxy-3,5,5-trimethylcyclohexane. Preferred graft initiator materials include peresters, percarbonates, diaroyl peroxides, alkyl hydroperoxides, diacyl peroxides, peroxycarbonates, peroxyketals, dialkylperoxides, and azo compounds. Most preferably, a perester such as t-butylperoctoate (t-BPO) or t-butylperbenzoate (t-BPB) is employed as the graft initiator. the amount of graft initiator employed depends on the specific properties of the initiator, for example, the manner in which the initiator decomposes. Typically, the amount of graft initiator constitutes 0.1 to 1% by weight of the sum total of the graft monomer(s) and the constituent monomers of the polymeric substrate.

The graft initiator is usually added directly into the reaction solution after addition of the graft monomer(s). Alternatively, the graft initiator may be added as part of a mixture of an additional solvent of a different composition from that of the reaction solvent. The choice of this additional solvent depends on miscibility with the reaction solution and the ability of the reaction solvent to dissolve the graft initiator.

The preferred nitrogenous monomer which is grafted onto the polymeric backbone is 2-vinylpyridine (2-VP). However, other polar C-vinylpyridines or other polar nitrogen-containing vinyl monomers may be grafted. Suitable other nitrogenous monomers for serving as grafts include: vinyl pyridines, such as 4-vinylpyridine and 2-methyl-5-vinylpyridine, vinylpyrroles, vinylindoles, vinylquinolines, vinylisoquinolines, vinylacridines, vinylpyrazines, vinylpyrimidines, vinyl pyridazines, vinylimidazoles, vinylthiazoles, dimethylaminoethylmethacrylate, dimethylaminoethylacrylate, N-vinylcarbazole, N-vinylsuccinimide, acrylonitrile, o-, m-, or p-aminostyrene, maleimide, N-vinyl oxazolidone, N,N-dimethylaminoethylvinylether, ethyl 2-cyanoacrylate, N-vinylphthalimide, 2-vinylquinoline, a variety of acrylamides and methacrylamides such as N-1,1-dimethyl-3-oxobutylacrylamide, N-1,2-dimethyl-1-ethyl-3-oxobutyl acrylamide, N-(1,3-diphenyl-1-methyl-3-oxopropyl)acrylamide, N-(1-methyl-1-phenyl-3-oxobutyl) methacrylamide, N,N-diethylaminoethylacrylamide, 2-hydroxyethylacrylamide, and N-methacrylamide of aminoethylethyleneurea, N-vinylbenzyldimethylamine, N-dimethylaminopropylacrylamide, N-dimethylaminopropylmethacrylamide, N-methacryloxyethylmorpholine, and N-maleimide of dimethylaminopropylamine.

Grafting of the nitrogenous monomer(s) may be performed over a temperature range of 25°C to 160°C. Preferably, grafting is accomplished at a temperature of 110°C to 130°C. The specific temperature employed depends in part upon the graft initiator and upon factors such as the specific monomer(s) to be grafted, and the reaction solvent. The specific temperature employed during grafting also depends on the half life of the graft initiator. As used hereinafter, "half life" means the time required for one half of the amount of graft initiator present in the reaction to decompose. Graft initiators with half-lives of 1 to 60 minutes may be utilized. Preferably, graft initiators with half lives of 20 to 40 minutes are employed. The selection of the appropriate graft initiator and the temperature range are made so that free radicals are not produced too rapidly during formation of the mixture of reactants.

The choice of grafting temperature is also influenced by the viscosity of the reaction solution. The viscosity of the reaction mixture generally limits the useful amounts of polymer solids in the reaction solution at which the grafting reaction can be performed. In general, as the grafting temperature increases, the viscosity of the reaction solution decreases and the amount of polymer solids which may be grafted increases.

The graft initiator may, for example, be added to the reaction solution, as a single discrete addition or as a series of 2 to 8 discrete additions, after addition of the nitrogenous graft monomer(s). Preferably, about 3 to 4 additions of graft initiator are employed. As an alternative to adding the graft initiator as a single discrete addition or in a series of discrete additions, the graft initiator may be added continuously over a period of time. The time period during which the graft initiator is added depends on process time limitations and the half life of the initiator.

The solvent medium for the preparation of the graft copolymer may, for example, be selected from petroleum-based mineral oils, synthetic lubricating oils and other organic solvents. For example, any inert, nonreactive aliphatic or aromatic hydrocarbon-based mineral oil may be used as the reaction solvent medium provided that the graft monomer and the polymer components are soluble in the oil and that the oil is pure enough so as not to interfere with polymerization. Preferably, the reaction solvent is a low molecular weight saturated oil. Examples of low molecular weight saturated oils suitable for use as reaction solvents include hydro refined 100N or 150N oils and poly-alpha olefins. Examples of suitable organic solvents include chlorobenzene, o-dichlorobenzene, benzene, cyclohexane, toluene, xylene, ethylene dichloride, and esters such as ethyl propionate or butylacetate. Still other solvents may be employed, as would be apparent to those skilled in the art.

The present invention will now be further illustrated by way of the following Examples which are for illustrative purposes only an are not to be construed as imposing any limitation on the scope of the invention.

### Example 1. Preparation of a 2-vinylpyridine graft to a polymethacrylate substrate from a 2% by weight charge of 2-vinylpyridine

A polymethacrylate substrate polymer was prepared from a monomer mix of 4,378 parts of isomeric C10 alkyl methacrylates of about 98% purity, 2,416 parts of C16 to C20 alkyl methacrylates of about 95% purity, 765 parts of methylmethacrylate of about 100% purity, 375 parts of a reaction solvent of 100N oil having a bromine number of less than 12, 11.48 parts of t-amylperoctoate (98% purity) and 9 parts of dodecyl mercaptan.

A first portion of 30% of the monomer mixture was added to a nitrogen flushed reactor. This first portion was heated to a polymerization temperature of 110°C whereupon the remainder of the monomer mixture was gradually added over about 50 minutes to the reactor. Thirty minutes after the remainder of the monomer mixture was added, a first discrete addition of a polymerization initiator of 3.83 parts of t-amylperoctoate (98% purity) in 375 parts of 100N oil having a Br number of less than 12 was added. A second discrete addition of this same polymerization initiator composition was added 30 minutes later. About 30 minutes after the second discrete addition of polymerization initiator, a sample of the resultant polymeric substrate material was removed to measure the extent of conversion of the monomer(s) into polymethacrylate substrate. The extent of conversion was found to be about 92.7%. Subsequently, about 150 parts of a graft monomer of 2-vinylpyridine of about 100% purity was added to the reactor whereupon the temperature was increased to about 120°C.

Grafting of the 2-vinylpyridine monomer onto the polymethacrylate substrate was accomplished by adding four discrete additions of a graft initiator composition of 6.62 grams of t-butylperbenzoate (t-BPB) (85% concentration in xylenes) in 375 grams of the 100N oil of bromine number of less than 12 at 20 minute intervals. Forty minutes after the last addition of graft initiator, 6372 grams of the 100N oil was added to reduce the viscosity of the product. The resultant graft copolymer of 2-vinylpyridine on polymethacrylate contained 0.65 wt. % 2-vinylpyridine. This corresponds to about 0.086 percent basic nitrogen (%N_{b}) within the graft copolymer product. The graft copolymer had an active fraction of about 62.7%.

As used herein, percent basic nitrogen (% N_{b}) is a measure of the amount of nitrogenous monomer in the graft copolymer molecule. The (% N_{b}) appears to depend on the amount of nitrogenous monomer charged, the percent conversion of the constituent monomers prior to grafting of the nitrogenous monomer and the amount of graft initiator. The (% N_{b}) can be determined from the amount of nitrogen titratable by perchloric acid in acetic acid in accordance with method ASTM D-974.

The amount of basic nitrogen in the graft portion of the grafted copolymer is a function of the extent of conversion of the constituent monomers and the amount of nitrogenous monomer charged during the grafting step. For example, a 4.3% basic nitrogen content in the graft portion of the copolymer has been attained by adding 2% by weight of 2-VP to a polymethacrylate substrate that represents 95.7% conversion of constituent monomers. Similarly, a 4.3% basic nitrogen content in the graft portion of the copolymer has been attained by adding 3% by weight of 2-vinylpyridine to a polymeric substrate that represents 93.6% conversion of constituent monomers.

### Example 2. Preparation of a 2-vinylpyridine graft onto a polymethacrylate substrate copolymer from a 3% by weight charge of 2-vinylpyridine

A polymethacrylate substrate was prepared from a monomer mix of 4332 parts of isomeric C10 alkyl methacrylates, 2392 parts of C16 to C20 alkyl methacrylates, 758 parts of methylmethacrylate, 375 parts of 100N oil of less than 12 bromine number, 11.48 parts of t-amylperoctoate (98% pure) and 9 parts of n-dodecylmercaptan. Thirty percent of this monomer mixture was added to a nitrogen-flushed reactor which was heated to 110°C while stirring. The remainder of the monomer mixture was added over about 50 minutes. Thirty minutes after adding the remaining monomer mixture, a discrete addition of a polymerization initiator composition of 3.83 parts of t-amylperoctoate in 375 parts of the same low bromine number 100N oil was added to the reactor. A second addition of this same initiator composition was added 30 minutes later. Thirty minutes after the second addition of polymerization initiator, a sample of the resulting polymeric substrate was removed for determination of the extent of conversion of the monomers into polymer. The extent of conversion was found to be about 96%. 2-vinylpyridine monomer was then charged to the reactor whereafter the temperature was increased to about 120°C. The amount of the 2-vinylpyridine monomer added was about 3% by weight of the total monomers (including 2-vinylpyridine).

Grafting of the 2-vinylpyridine was accomplished by adding 4 discrete additions of a graft initiator of 8.82 parts of t-butylperbenzoate (85% concentration in xylenes) in 375 parts of the low bromine number 100N oil at 20 minute intervals. About 40 minutes after the last addition of graft initiator, about 5800 parts of the 100N oil was added to reduce the viscosity. The final graft copolymer contained about 0.145% N_{b}, corresponding to 1.09% 2-vinylpyridine in the graft copolymer. The active fraction was 75.6%.

### Example 3. Preparation of a 2-vinylpyridine graft onto a polymethacrylate substrate from a 3.5% by weight charge of 2-vinylpyridine

Using the procedure of Example 1, a monomer mixture of about 4309 parts of isomeric C10 alkylmethacrylates, 2380 parts of C16 to C20 alkyl methacrylates, 754 parts of methylmethacrylate, 375 parts of 100N oil bromine number less than 12, 11.48 parts of t-amylperoctoate, and 9 parts of n-dodecylmercaptan was polymerized into a polymethacrylate substrate. The polymethacrylate substrate represented conversion of 94.4% of the monomers. About 262.5 parts of 2-vinylpyridine, that is, about 3.5% by weight of the total monomers (including the 2-vinylpyridine), was grafted by the procedure of Example 1 wherein 4 discrete additions of a graft initiator of 4.41 parts of t-butylperbenzoate (85% concentration in xylenes) in 375 parts of this same low bromine number of 100N oil was employed. The graft copolymer contained 0.102% (N_{b}), corresponding to 0.77% 2-vinylpyridine in the graft copolymer, and had an active fraction of 63.5%.

### Example 4. Preparation of a 2-vinylpyridine graft onto a polymethacrylate substrate from 4.5% by weight charge of 2-vinylpyridine.

Following the procedure of Example 1, a polymethacrylate substrate was prepared by conversion of about 94.5% of the monomers. 337.5 parts of 2-vinylpyridine was then grafted onto this substrate. The resultant graft copolymer contained 0.142% (N_{b}), corresponding to 1.07 wt.% 2-vinylpyridine and had an active fraction of 63.1% after homogenization to a shear stability index of 41.2.

### Example 5. Preparation of a 2-vinylpyridine graft onto a styrene/polymethacrylate copolymer from a 2% by weight charge of 2-vinylpyridine

A styrene/polymethacrylate copolymer substrate was formed from a monomer mixture of 6345 parts of isomeric C10 methacrylates, 1103 parts of styrene, and 8.81 parts of t-butylperbenzoate (85% concentration in xylenes). This mixture was added to a nitrogen-flushed reactor and polymerization was initiated by heating to 120°C while stirring. After about one hour, a discrete addition of polymerization initiator of 4.41 parts of t-butylperbenzoate (85% concentration in xylenes) in 225 parts of 100N oil of bromine number less than 12 was added to the reactor. One hour later, a second identical addition of the polymerization initiator was added. After about 15 minutes, an exotherm occurred which raised the reaction temperature to about 132°C. Twenty minutes after the second addition of polymerization initiator, about 375 parts of the 100N low bromine number oil was added to reduce viscosity and to improve stirring. Forty minutes after the addition of this low bromine number oil, a second addition of 375 parts of the oil was added. Ten minutes after the second addition of oil, a third addition of 375 parts of the oil was added. A third addition of the polymerization initiator was added 5 minutes after the third addition of oil. One hour after the third addition of polymerization initiator, 150 parts of 2-vinylpyridine monomer was added. A final addition of 375 parts of the low bromine number oil was added 30 minutes after the addition of the 2-vinylpyridine.

The first of 3 discrete additions of graft initiator of of 8.81 parts of t-butylperbenzoate (85% concentration in xylenes) in 375 parts of the low bromine number oil was then added 30 minutes after completion of the addition of the oil. The remaining second and third additions of the graft initiator were added at 30 minute intervals. The resultant graft copolymer contained 0.115% (N_{b}), corresponding to 0.86 wt.% 2-vinylpyridine. The graft copolymer had an active fraction of 39.2% after homogenization of a shear stability index of 37.8.

When the graft copolymer products of the invention are employed in multigrade lubricating oils, it appears that the ability of the multigrade lubricating oils to control deposits on pistons of diesel engines varies with the percentage of basic nitrogen in the graft portion of the graft copolymer. Graft copolymer products with basic nitrogen contents of from about 3.8 to 6.0% in the graft portion of the copolymer, preferably from about 4.3 - 5.5%, have been found to provide lubricating oils which show unexpectedly improved cleanliness in large diesel engines.

Lubricating oils which include the graft copolymers of the invention exhibit surprisingly improved performance compared to other types of nitrogenous graft copolymers when employed in internal combustion engines. The increase in performance is particularly surprising when oils which employ the graft copolymers of the invention are employed in diesel engines. This is illustrated by the following comparative example wherein the performance of a graft copolymer of N-vinylpyrrolidone on polymethacrylate made in accordance with US-A-3,506,574 is compared with a graft copolymer of 2-vinylpyridine on polymethacrylate of the present invention.

### Comparative Example

In accordance with US-A-3,506,574 a graft copolymer of N-vinylpyrrolidone on polymethacrylate was manufactured from a 3% charge of N-vinylpyrrolidone monomer. The resultant graft copolymer was incorporated into SAE 5W-30 grade oil which contained 9.8% of Amoco Corporation PC6-006 detergent/inhibitor package and subjected to the Caterpillar Corporation 1H2 test developed by Caterpillar Corp., Peoria, IL. Similarly, a graft copolymer of 2-vinylpyridine on polymethacrylate, made in accordance with Example 2 above, was incorporated into SAE 5W-30 grade oil which contained 9.8% of Amoco PC6006 detergent inhibitor package and subjected to the Caterpillar Corporation 1H2 test. The results of the performance of these graft copolymers are given below:

| | Caterpillar 1H2 Test Results | | | |
|---|---|---|---|---|
| | 240 Hours | | 480 Hours | |
| Polymer type | % TGF | WTD | %TGF | WTD |
| N-VP on PMA | 72 | 157.2 | 70 | 169.1 |
| 2-VP on PMA | 39 | 80.0 | 36 | 95.8 |
| 2-VP = 2-vinylpyridine | | | | |
| N-VP - N-vinylpyrrolidone | | | | |
| PMA = polymethacrylate | | | | |
| %TGF = % top groove filing of engine piston | | | | |
| WTD = weighted total demerits | | | | |

The results of the Caterpillar 1H2 test, as indicated by the change in the %TGF, indicate that a graft copolymer of 2-vinylpyridine on polymethacrylate shows surprisingly improved performance in large diesel engines relative to graft copolymers of N-vinylpyrrolidone on polymethacrylate. The TGF, as discussed in US-A-3,951,831, and the WTD are measures of the performance of the polymer additive in lubricating oil. As shown above, the % TGF when a graft copolymer of 2-vinylpyridine on polymethacrylate is used is about one half of the %TGF when a graft copolymer of N-vinylpyrrolidone on polymethacrylate is used. Similarly, the WTD achieved with use of 2-vinylpyridine is substantially less than the WTD achieved with N-vinylpyrrolidone. These substantial reductions in top groove filing and weighted total demerits indicate the surprising performance of graft copolymers of 2-vinylpyridine on polymethacrylate.

The graft copolymer products of this invention may be used in a wide variety of lubricant base stocks as well as in other applications where their superior dispersancy or viscosity-temperature control properties are of value. Possible lubricant base stocks which may include the products of the invention include oils of both mineral (petroleum) and synthetic origin. The lubricants containing the products of this invention may also include other additives to provide additional dispersancy, viscosity-temperature control, pour point depressancy, high temperature detergency, rust inhibition, antiwear agents, antioxidants, extreme pressure agents, friction modifiers, antifoam agents or dyes.

## Claims

1. A method of producing a graft copolymer of a nitrogenous monomer graft onto a polymeric substrate, which comprises:-
(a) polymerization of a mixture of vinyl monomers, optionally together with one or more olefin monomer or copolymer, to produce a polymeric substrate that constitutes at least ninety one percent, for example at least ninety three percent, conversion of monomer to polymer; and
(b) graft polymerizing, onto the polymeric substrate and in the presence of a free radical initiator capable of hydrogen abstraction, one or more polymerizable nitrogenous monomer selected from vinyl pyridines, vinylpyrroles, vinylindoles, vinylquinolines, vinylisoquinolines, vinylacridines, vinylpyrazines, vinylpyrimidines, vinylpyridazines, vinylimidazoles, vinylthiazoles, acrylamides, methacrylamides, dimethylaminoethylmethacrylate, dimethylaminoethylacrylate, N-vinylcarbazole, N-vinylsuccinimide, acrylonitrile, o- ,m- and p-aminostyrene, maleimide, N-vinyl oxazolidine, N,N-dimethylaminoethylvinylether, ethyl-2-cyanoacrylate, N-vinylphthalimide, N-vinylbenzyldimethylamine, N-methacryloxyethylmorpholine, and N-maleimide of dimethylaminopropylamine; and wherein the graft copolymer does not contain a lactam grafted onto the polymeric substrate.

2. A method as claimed in claim 1, wherein step (a) comprises polymerizing a first portion of the vinyl monomers and, if used, the olefin monomer(s) or copolymer(s), while adding a second portion of the vinyl monomers and, if used, the olefin monomer(s) or copolymer(s), to said first portion.

3. A method as claimed in claim 1 or claim 2, wherein the vinyl monomers in step (a) is/are selected from acrylates, methacrylates, styrene, styrene derivatives, maleates, fumarates, and maleic anhydride followed by functionalization of the anhydride.

4. A method as claimed in any preceding claim, wherein the polymeric substrate, in step (a), is formed from a mixture of the vinyl monomers.

5. A method as claimed in any preceding claim, wherein the free radical initiator, in step (b), is selected from peresters, percarbonates, diaroyl peroxides, diacyl peroxides, alkyl hydroperoxides, peroxycarbonates, peroxyketals, dialkyl peroxides, and azo compounds.

6. A method as claimed in any preceding claim, wherein the polymerizable nitrogenous monomer(s) is/are selected from vinylpyridines, vinylpyrroles, vinylindoles, vinylquinolines, vinylisoquinolines, vinylacridines, viylpyrazines, vinylpyrimidines, vinylpyridazines, vinylimidazoles, vinylthiazoles, and N-vinylcarbazoles.

7. A method as claimed in claim 6, wherein the polymerizable nitrogenous monomer(s) is/are selected from 2-vinylpyridine, 4-vinylpyridine and 2-methyl-5-vinylpyridine.

8. A method as claimed in any preceding claim, wherein the graft polymerization, in step (b), is performed at a temperature of from 25°C to 160°C.

9. A method as claimed in any preceding claim, wherein the graft copolymerization, in step (b), is performed in the presence of a solvent selected from petroleum-based mineral oils, synthetic lubricating oils, and other organic solvents.

10. A method as claimed in any preceding claim, wherein the nitrogenous graft monomer(s), grafted onto the polymeric substrate, comprises about 6 percent of the weight of the polymeric substrate.

11. A method as claimed in any preceding claim, wherein, in step (a), the polymeric substrate is produced by free radical polymerization of the vinyl monomers and, if used, the optional olefin monomer(s) or copolymer(s).

12. A nitrogenous graft copolymer having improved performance in internal combustion engines, which comprises a polymeric substrate onto which is grafted one or more nitrogenous monomer, and wherein:-
(a) the polymeric substrate comprises units of a mixture of vinyl monomers and, optionally, units of one or more olefin monomer or olefin copolymer;
(b) the nitrogenous monomer(s) is/are selected from vinylpyridines, vinylpyrroles, vinylindoles, vinylquinolines, vinylisoquinolines, vinylacridines, vinylpyrazines, vinylpyrimidines, vinylpyridazines, vinylimidazoles, vinylthiazoles, acrylamides, methacrylamides, dimethylaminoethylmethacrylate, dimethylaminoethylacrylate, N-vinylcarbazole, N-vinylsuccinimide, acrylonitrile, o-, m- and p-aminostyrene, maleimide, N-vinyloxazolidine, N,N-dimethylaminoethylvinylether, ethyl-2-cyanoacryla te, N-vinylphthalimide, N-vinylbenzyldimethylamine, N-methacryloxyethylmorpholine, and N-maleimide of dimethylaminopropylamine; and
(c) the graft copolymer does not contain a lactam grafted onto the polymeric substrate.

13. A nitrogenous graft copolymer as claimed in claim 12, wherein the nitrogenous monomer(s) is/are selected from vinylpyridines, vinylpyrroles, vinylindoles, vinylquinolines, vinylisoquinolines, vinylacridines, vinylpyrazines, vinylpyrimidines, vinylpyridazines, vinylimidazoles, vinylthiazoles, and N-vinylcarbazoles.

14. A nitrogenous graft copolymer as claimed in claim 12 and claim 13, wherein
(i) the nitrogenous monomer(s) is/are selected from 2-vinylpyridine, 4-vinylpyridine, 2-methyl-5-vinylpyridine, and vinyl quinolines, and/or
(ii) the polymeric substrate comprises units of a mixture of vinyl monomers selected from acrylates, methacrylates, styrene, styrene derivatives, maleates, fumarates, and maleic anhydride followed by the functionalization of the anhydride, and, optionally, units of one or more olefin monomer or olefin copolymer.

15. A nitrogenous graft copolymer as claimed in any of claims 12 to 14, which has a basic nitrogen content of from about 3.8 to 6.0 percent in the graft portion thereof.

## Patentansprüche

1. Verfahren zur Herstellung eines Pfropfcopolymers eines stickstoffhaltigen Monomers, welches auf ein polymeres Substrat gepfropft ist, welches Verfahren umfaßt:
(a) Polymerisation eines Gemisches von Vinylmonomeren, gegebenenfalls zusammen mit einem oder mehreren Olefinmonomeren oder -copolymeren, um ein polymeres Substrat zu bilden, welche Polymerisation mindestens einundneunzig Prozent, zum Beispiel mindestens dreiundneunzig Prozent, Umsetzung von Monomer zu Polymer ausmacht; und
(b) Pfropfpolymensieren, auf das polymere Substrat und in der Gegenwart eines Freiradikalinitiators, der zur Wasserstoffabstraktion fähig ist, eines oder mehrerer polymerisierbarer, stickstoffhaltiger Monomere, ausgewählt aus Vinylpyridinen, Vinylpyrrolen, Vinylindolen, Vinylchinolinen, Vinylisochinolinen, Vinylacridinen, Vinylpyrazinen, Vinylpyrimidinen, Vinylpyridazinen, Vinylimidazolen, Vinylthiazolen, Acrylamiden, Methacrylamiden, Dimethylaminoethylmethacrylat, Dimethylaminoethylacrylat, N-Vinylcarbazol, N-Vinylsuccinimid, Acrylnitril, o-, m- und p-Aminostyrol, Maleinimid, N-Vinyloxazolidin, N,N-Dimethylaminoethylvinylether, Ethyl-2-cyanoacrylat, N-Vinylphthalimid, N-Vinylbenzyldimethylamin, N-Methacryloxyethylmorpholin und N-Maleinimid von Dimethylaminopropylamin; und wobei das Pfropfcopolymer kein Lactam enthält, welches auf das polymere Substrat gepfropft ist.

2. Verfahren, wie in Anspruch 1 beansprucht, wobei der Schritt (a) ein Polymerisieren eines ersten Teils der Vinylmonomeren und, falls verwendet, des (der) Olefinmonomers(en) oder -copolymers(en) umfaßt, während ein zweiter Teil der Vinylmonomeren und, falls verwendet, des (der) Olefinmonomers(en) oder -copolymers(en), dem ersten Teil zugegeben wird.

3. Verfahren, wie in Anspruch 1 oder Anspruch 2 beansprucht, wobei die Vinylmonomeren im Schritt (a) gewählt sind aus Acrylaten, Methacrylaten, Styrol, Styrolderivaten, Maleaten, Fumaraten und Maleinsäureanhydrid, gefolgt von einer Funktionalisierung des Anhydrids.

4. Verfahren, wie in einem vorhergehenden Anspruch beansprucht, wobei das polymere Substrat im Schritt (a) aus einem Gemisch der Vinylmonomeren gewählt ist.

5. Verfahren, wie in einem vorhergehenden Anspruch beansprucht, wobei der Freiradikalinitiator im Schritt (b) aus Perestern, Percarbonaten, Diaroylperoxiden, Diacylperoxiden, Alkylhydroperoxiden, Peroxycarbonaten, Peroxyketalen, Dialkylperoxiden und Azoverbindungen gewählt ist.

6. Verfahren, wie in einem vorhergehenden Anspruch beansprucht, wobei das (die) polymerisierbare(n) Monomer(en) aus Vinylpyridinen, Vinylpyrrolen, Vinylindolen, Vinylchinolinen, Vinylisochinolinen, Vinylacridinen, Vinylpyrazinen, Vinylpyrimidinen, Vinylpyridazinen, Vinylimidazolen, Vinylthiazolen und N-Vinylcarbazolen gewählt ist (sind).

7. Verfahren, wie in Anspruch 6 beansprucht, wobei das (die) polymerisierbare(n) Monomer(en) aus 2-Vinylpyridine, 4-Vinylpyridin und 2-Methyl-5-vinylpyridin gewählt ist (sind).

8. Verfahren, wie in einem vorhergehenden Anspruch beansprucht, wobei die Pfropfpolymerisation im Schritt (b) bei einer Temperatur von 25°C bis 160°C ausgeführt wird.

9. Verfahren, wie in einem vorhergehenden Anspruch beansprucht, wobei die Pfropfcopolymerisation im Schritt (b) in der Gegenwart eines Lösungsmittels ausgeführt wird, das aus Mineralölen auf Erdölbasis, synthetischen Schmierölen und organischen Lösungsmitteln gewählt ist.

10. Verfahren, wie in einem vorhergehenden Anspruch beansprucht, wobei das (die) stickstoffhaltigen Pfropfmonomer(en), das (die) auf das polymere Substrat gepfropft ist (sind), etwa 6 Prozent des Gewichtes des polymeren Substrates umfaßt (umfassen).

11. Verfahren, wie in einem vorhergehenden Anspruch beansprucht, wobei im Schritt (a) das polymere Substrat durch Freiradikalpolymerisation der Vinylmonomeren und, falls verwendet, des (der) gegebenenfalls vorhandenen Olefinmonomers(e) oder -copolymers(e) hergestellt wird.

12. Stickstoffhaltiges Pfropfcopolymer mit verbesserten Eigenschaften in Verbrennungskraftmaschinen, welches ein polymeres Substrat umfaßt, auf welches ein oder mehrere stickstoffhaltige Monomere gepfropft sind, und wobei:
(a) das polymere Substrat Einheiten eines Gemisches von Vinylmonomeren und, gegebenenfalls, Einheiten von einem oder mehreren Olefinmonomeren oder Olefincopolymeren umfaßt;
(b) das(die) stickstoffhaltige(n) Monomer(en) ausgewählt ist (sind) aus Vinylpyridinen, Vinylpyrrolen, Vinylindolen, Vinylchinolinen, Vinylisochinolinen, Vinylacridinen, Vinylpyrazinen, Vinylpyrimidinen, Vinylpyndazinen, Vinylimidazolen, Vinylthiazolen, Acrylamiden, Methacrylamiden, Dimethylaminoethylmethacrylat, Dimethylaminoethylacrylat, N-Vinylcarbazol, N-Vinylsuccinimid, Acrylnitril, o-, m- und p-Aminostyrol, Maleinimid, N-Vinyloxazolidin, N,N-Dimethylaminoethylvinylether, Ethyl-2-cyanoacrylat, N-Vinylphthalimid, N-Vinylbenzyldimethylamin, N-Methacryloxyethylmorpholin und N-Maleinimid von Dimethylaminopropylamin; und
(c) das Pfropfcopolymer kein Lactam enthält, welches auf das polymere Substrat gepfropft ist.

13. Stickstoffhaltiges Pfropfcopolymer, wie in Anspruch 12 beansprucht, wobei das (die) stickstoffhaltige(n) Monomer(en) aus Vinylpyridinen, Vinylpyrrolen, Vinylindolen, Vinylchinolinen, Vinylisochinolinen, Vinylacridinen, Vinylpyrazinen, Vinylpyrimidinen, Vinylpyridazinen, Vinylimidazolen, Vinylthiazolen und N-Vinylcarbazolen gewählt ist (sind).

14. Stickstoffhaltiges Pfropfcopolymer, wie in Anspruch 12 und in Anspruch 13 beansprucht, wobei
(i) das (die) stickstoffhaltige(n) Monomer(en) aus 2-Vinylpyridine, 4-Vinylpyridin, 2-Methyl-5-vinylpyridin und Vinylchinolin gewählt ist (sind), und/oder
(ii) das polymere Substrat Einheiten eines Gemisches von Monomeren, die gewählt sind aus Acrylaten, Methacrylaten, Styrol, Styrolderivaten, Maleaten, Fumaraten und Maleinsäureanhydrid, gefolgt von der Funktionalisierung des Anhydrids, und, gegebenenfalls, Einheiten eines oder mehrerer Olefinmonomere oder Olefincopolymere umfaßt.

15. Stickstoffhaltiges Pfropfcopolymer, wie in einem der Ansprüche 12 bis 14 beansprucht, welches einen Gehalt an basischem Stickstoff von etwa 3,8 bis 6,0 Prozent in seinem Pfropfteil aufweist.

## Revendications

1. Procédé de préparation d'un copolymère greffé d'un monomère azoté greffé sur un substrat polymère, comprenant les étapes consistant:
(a) à polymériser un mélange de monomères vinyliques, facultativement avec un ou plusieurs monomères ou copolymères oléfiniques, pour produire un substrat polymère qui constitue au moins quatre vingt onze pour cent, par exemple au moins quatre vingt treize pour cent, de transformation de monomère en polymère; et
(b) à polymériser par greffe, sur le substrat polymère et en présence d'un initiateur de radicaux libres capable d'extraire l'hydrogène, un ou plusieurs monomères azotés polymérisables choisis parmi les vinylpyridines, les vinylpyrroles, les vinylindoles, les vinylquinoléines, les vinylisoquinoléines, les vinylacridines, les vinylpyrazines, les vinylpyrimidines, les vinylpyridazines, les vinylimidazoles, les vinylthiazoles, les acrylamides, les méthacrylamides, le diméthylaminoéthylméthacrylate, le diméthylaminoéthylacrylate, le N-vinylcarbazole, le N-vinylsuccinimide, l'acrylonitrile, les o-, m- et p-aminostyrène, le maléimide, la N-vinyloxazolidine, le N,N-diméthylaminoéthylvinyléther, le 2-cyanoacrylate d'éthyle, le N-vinylphthalimide, la N-vinylbenzyldiméthylamine, la N-méthacryloxyéthylmorpholine, et le N-maléimide de la diméthylaminopropylamine; et dans lequel le copolymère greffé ne contient pas de lactame greffé sur le substrat polymère.

2. Procédé tel que revendiqué dans la revendication 1, dans lequel l'étape (a) comprend la polymérisation d'une première partie des monomères vinyliques et, si l'on en utilise, du(des) monomère(s) ou du(des) copolymère(s) oléfinique(s), tout en ajoutant une deuxième partie des monomères vinyliques et, si l'on en utilise, du(des) monomère(s) ou du(des) copolymère(s) oléfinique(s), à ladite première partie.

3. Procédé tel que revendiqué dans la revendication 1 ou la revendication 2, dans lequel le(s) monomère(s) vinylique(s) de l'étape (a) est/sont choisi(s) par les acrylates, les méthacrylates, le styrène, les dérivés du styrène, les maléates, les fumarates et l'anhydride maléique suivi de la fonctionnalisation de l'anhydride.

4. Procédé tel que revendiqué dans une revendication précédente quelconque, dans lequel le substrat polymère, dans l'étape (a), est formé à partir d'un mélange de monomères vinyliques.

5. Procédé tel que revendiqué dans une revendication précédente quelconque, dans lequel l'initiateur de radicaux libres dans l'étape (b), est choisi parmi les peresters, les percarbonates, les diaroyl peroxydes, les diacyl peroxydes, les alkyl hydroperoxydes, les peroxycarbonates, les peroxycétals, les dialkyl peroxydes, et les composés azo.

6. Procédé tel que revendiqué dans une revendication précédente quelconque, dans lequel le(s) monomère(s) azoté(s) polymérisable(s) est/sont choisi(s) parmi les vinylpyridines, les vinylpyrroles, les vinylindoles, les vinylquinoléines, les vinylisoquinoléines, les vinylacridines, les vinylpyrazines, les vinylpyrimidines, les vinylpyridazines, les vinylimidazoles, les vinylthiazoles, et les N-vinylcarbazoles.

7. Procédé tel que revendiqué dans la revendication 6, dans lequel le(s) monomère(s) azoté(s) est/sont choisi(s) parmi la 2-vinylpyridine, la 4-vinylpyridine et la 2-méthyl-5-vinylpyridine.

8. Procédé tel que revendiqué dans une revendication précédente quelconque, dans lequel la polymérisation par greffe, dans l'étape (b), est effectuée à une température allant de 25°C à 160°C.

9. Procédé tel que revendiqué dans une revendication précédente quelconque, dans lequel la copolymérisation par greffe, dans l'étape (b), est effectuée en présence d'un solvant choisi parmi les huiles minérales d'origine pétrolière, les huiles de lubrification synthétiques, et autres solvants organiques.

10. Procédé tel que revendiqué dans une revendication précédente quelconque, dans lequel le(s) monomère(s) azoté(s) de greffe, greffé(s) sur le substrat polymère, comprend (comprennent) environ 6 pour cent du poids du substrat polymère.

11. Procédé tel que revendiqué dans une revendication précédente quelconque, dans lequel, dans l'étape (a), le substrat polymère est produit par polymérisation de radicaux libres des monomères vinyliques, et si l'on en utilise, du(des) monomère(s) ou du(des) copolymères oléfinique(s) facultatif(s).

12. Copolymère greffé azoté donnant une performance améliorée dans les moteurs à combustion interne, qui comprend un substrat polymère sur lequel est greffé un ou plus d'un monomère azoté, et dans lequel:
(a) le substrat polymère comprend des unités d'un mélange de monomères vinyliques et, facultativement, des unités d'un ou plusieurs monomères oléfiniques ou copolymères oléfiniques,
(b) le(s) monomère(s) azoté(s) est/sont choisi(s) parmi les vinylpyridines, les vinylpyrroles, les vinylindoles, les vinylquinoléines, les vinylisoquinoléines, les vinylacridines, les vinylpyrazines, les vinylpyrimidines, les vinylpyridazines, les vinylimidazoles, les vinylthiazoles, les acrylamides, les méthacrylamides, le diméthylaminoéthylméthacrylate, le diméthylaminoéthylacrylate, le N-vinylcarbazole, le N-vinylsuccinimide, l'acrylonitrile, les o-,m- et p-aminostyrène, le maléimide, la N-vinyloxazolidine, le N,N-diméthylaminoéthylvinyléther, le 2-cyanoacrylate d'éthyle, le N-vinylphtalimide, la N-vinylbenzyldiméthylamine, la N-méthacryloxyéthylmorpholine, et le N-maléimide de la diméthylaminopropylamine; et
(c) le copolymère greffé ne contient pas de lactame greffé sur le substrat polymère.

13. Copolymère greffé azoté tel que revendiqué dans la revendication 12, dans lequel le(s) monomère(s) azoté(s) est/sont choisi(s) parmi les vinylpyridines, les vinylpyrroles, les vinylindoles, les vinylquinoléines, les vinylisoquinoléines, les vinylacridines, les vinylpyrazines, les vinylpyrimidines, les vinylpyridazines, les vinylimidazoles, les vinylthiazoles, et les N-vinylcarbazoles.

14. Copolymère greffé azoté tel que revendiqué dans la revendication 12 et la revendication 13, dans lequel
(i) le(s) monomère(s) azoté(s) est/sont choisi(s) parmi la 2-vinylpyridine, la 4-vinylpyridine, la 2-méthyl-5-vinylpyridine, et les vinylquinoléines, et/ou
(ii) le substrat polymère comprend des unités d'un mélange de monomères vinyliques choisis parmi les acrylates, les méthacrylates, le styrène, les dérivés du styrène, les maléates, les fumarates, et l'anhydride maléique suivi de la fonctionnalisation de l'anhydride, et, facultativement, d'un ou plusieurs monomères oléfiniques ou copolymères oléfiniques.

15. Copolymère greffé azoté tel que revendiqué dans l'une quelconque des revendications 12 à 14, possédant une teneur en azote basique allant d'environ 3,8 à 6,0 pour cent de la partie greffée de celui-ci.
